# EUROPÄISCHE PATENTSCHRIFT

(11) **EP 0 370 562 B1**
(45) Veröffentlichungstag und Bekanntmachung des Hinweises auf die Patenterteilung: **09.06.1993**
(21) Anmeldenummer: 89202887.9
(22) Anmeldetag: 15.11.1989
(51) Int. Cl.: B22F 5/08, B22F 3/02

(54) **Verfahren und Vorrichtung zur Umformung von Zahnflanken pulvermetallurgisch hergestellter Kupplungskörper**
Process and apparatus for working the tooth flanks of coupling devices prepared by powder metallurgy
Procédé et installation de façonnage de flancs de dents d'un dispositif d'embrayage formé à partir de poudre métallique

(30) Priorität: 25.11.1988 DE 3839800
(43) Veröffentlichungstag der Anmeldung: 30.05.1990
(73) Patentinhaber: SINTERSTAHL Gesellschaft m.b.H., D-87629 Füssen (DE)
(72) Erfinder: Stein, Franz, D-8958 Füssen (DE)
(74) Vertreter: Lohnert, Wolfgang, Dr.

(56) Entgegenhaltungen:
- DE-A- 2 219 856
- FR-A- 2 226 235
- FR-A- 2 557 946
- US-A- 3 688 549
- US-A- 3 727 999
- US-A- 4 299 112

## Beschreibung

Die Erfindung betrifft ein Verfahren und eine Vorrichtung zur Herstellung einer Flankenzurücknahme an Zahnflanken von pulvermetallurgisch hergestellten Kupplungskörpern. Dazu gehören insbesondere Synchronringe für Kfz-Schaltgetriebe.

Mechanisch hochbelastete Kupplungskörper, z. B. Synchronringe für Kfz-Schaltgetriebe, werden bis heute überwiegend aus Schmiederohlingen mittels spanabhebender Bearbeitung hergestellt, wobei insbesondere das Anbringen der Flankenzurücknahme an den Zahnflanken den Einsatz von Spezialmaschinen erfordert und hohen Kostenaufwand verursacht. Soweit derartige Kupplungskörper heute pulvermetallurgisch gefertigt werden, vorwiegend aus Werkstoffen der Klasse Sint E - Sint F, müssen diese verfahrensbedingt zunächst mit achsparallelen Zahnflanken hergestellt werden. Die Technik des Pulverpressens zu Formkörpern erlaubt keine abweichende Ausführung. Die Flankenzurücknahme, d. h. die Ausgestaltung einer bezüglich der Achsrichtung angeschrägten Zahnflanke, muß im Anschluß an die Sinterung, ebenso wie bei aus Schmiederohlingen hergestellten Synchronringen, in einem kostenintensiven, gesonderten Bearbeitungsschritt gefertigt werden. Die Flankenzurücknahmen werden üblicherweise durch Fräsen, Schleifen oder Rollen angebracht.
Infolge des hohen technischen Extraaufwandes und der hohen Fertigungskosten für die spanabhebende Bearbeitung der Flankenzurücknahme geht daher der wirtschaftliche Vorteil des Formdirektpressens von Sinterteilen gegenüber den durch spanabhebende Bearbeitung hergestellten Formkörpern in der Regel verloren oder ergibt sogar Nachteile.

Die Ausgestaltung von Flankenzurücknahmen an Synchronringen ist nach dem heutigen Ausführungsstand von Kfz-Schaltgetrieben unumgänglich. Nur so lassen sich Zahnkränze verschiedener Zahnräder leichtgängig und geräuscharm verkuppeln. Aber auch bei Zahnrädern für sonstige Transmissionen und Getriebe werden üblicherweise zumindest in deren an die Breitseite angrenzenden Randbereichen der Zahnflanken Fasen bzw. Flankenzurücknahmen angebracht.

Die Aufgabe vorliegender Erfindung besteht somit in der Bereitstellung eines gegenüber dem Stand der Technik wirtschaftlicheren Verfahrens für die Ausgestaltung der Flankenzurücknahme an pulvermetallurgisch hergestellten Kupplungs-Formkörpern mit Zahnkränzen. Die Aufgabe besteht weiters darin, die Nachteile des unkontrollierten Materialfließens und die unerwünschte Formänderung zu vermeiden, wie sie bei der Herstellung von Flankenzurücknahmen mittels der vorbeschriebenen Technik des Rollens unumgänglich sind.

Die Aufgabe wird erfindungsgemäß durch ein Verfahren gemäß Anspruch 1 vorliegender Erfindung gelöst. Bevorzugte Ausführungen des Verfahrens sowie Vorrichtungen zur Durchführung des Verfahrens sind in den Unteransprüchen dargestellt.

Nach dem erfinderischen Verfahren werden Zahnf lanken üblicherweise um einen Winkel zwischen 2^{o} und 10^{o} versetzt bzw. zurückgenommen. Bei kleinen Flächenbreiten der Zahnflanken oder bei über das übliche Maß von 0,5 - 2 % hinausgehende Restporosität sind auch größere Winkel denkbar. Die Konussteigung, d. h. der Winkel zwischen Stempel-Konuswand und Stempelhubrichtung, entspricht dem Winkel α. Entsprechend greifen die Umformkräfte unter einem Winkel β zur Stempelhubrichtung am Werkstück an.

Flankenzurücknahmen an Kupplungskörpern, insbesondere an Komponenten für Synchrongetriebe, lassen sich nach dem erfinderischen Verfahren wesentlich kostengünstiger als bisher herstellen, weil neben den in der Pulvermetallurgie angewendeten Verfahren des Pressens und Sinterns nicht auch noch zusätzlich Spezialmaschinen zur spanabhebenden Bearbeitung bereitgestellt werden müssen. Der Kostenvorteil beruht weiterhin darauf, daß die Herstellung von Flankenzurücknahmen nach spanabhebenden Verfahren Zahn um Zahn erfolgen muß und damit sehr zeit- und lohnintensiv ist, während die Flankenzurücknahmen nach dem erfinderischen Verfahren in einem einzigen Preßvorgang an allen Zahnflanken eines Kupplungskörpers gleichzeitig hergestellt werden können. Bei der Fertigung von Flankenzurücknahmen nach dem erfinderischen Verfahren an pulvermetallurgisch, einschließlich durch Sinterschmieden, hergestellten Kupplungskörpern, wird ein im übrigen als Nachteil geltender Zustand genutzt, daß derartige Formkörper auch nach dem Sintern noch eine gewisse Restporosität aufweisen. Es war gleichwohl nicht vorhersehbar und überraschend, daß nach dem erfinderischen Umformverfahren noch bemerkenswerte Volumensänderungen an den Zähnen vorgenommen werden können, ohne daß es in nicht mehr tolerierbarem Ausmaße zum Fließen des Werkstoffes und zu unvermeidbaren Verformungen und Maßänderungen in nicht aktiv umgeformten Bereichen der Zähne von Kupplungskörpern kommt.

Aufgrund der heute geforderten hohen Präzision für derartige, sintermetallurgisch hergestellte Formkörper, müssen diese üblicherweise in speziellen Preßformen nachkalibriert werden. Dies kann nunmehr in einem einzigen Arbeitsgang, gemeinsam mit dem erfinderischen Verfahren durchgeführt werden. Bei einem Umformwerkzeug zur Durchführung des erfinderischen Verfahrens werden bezüglich Auflage und Detailabstützung für das zu verformende Werkstück gleich hohe Maßpräzisionen gefordert wie bei einem Kalibrierwerkzeug. Mit der Zusammenlegung beider Verfahrensschritte und der Herstellung eines einzigen kombinierten Preßwerkzeuges entstehen große Kostenvorteile.
Derart gefertigte Kupplungskörper lassen sich ohne weitere Nachbehandlung bestimmungsgemäß verwenden.

Die Erfindung wird anhand des nachfolgenden Beispieles näher erläutert.

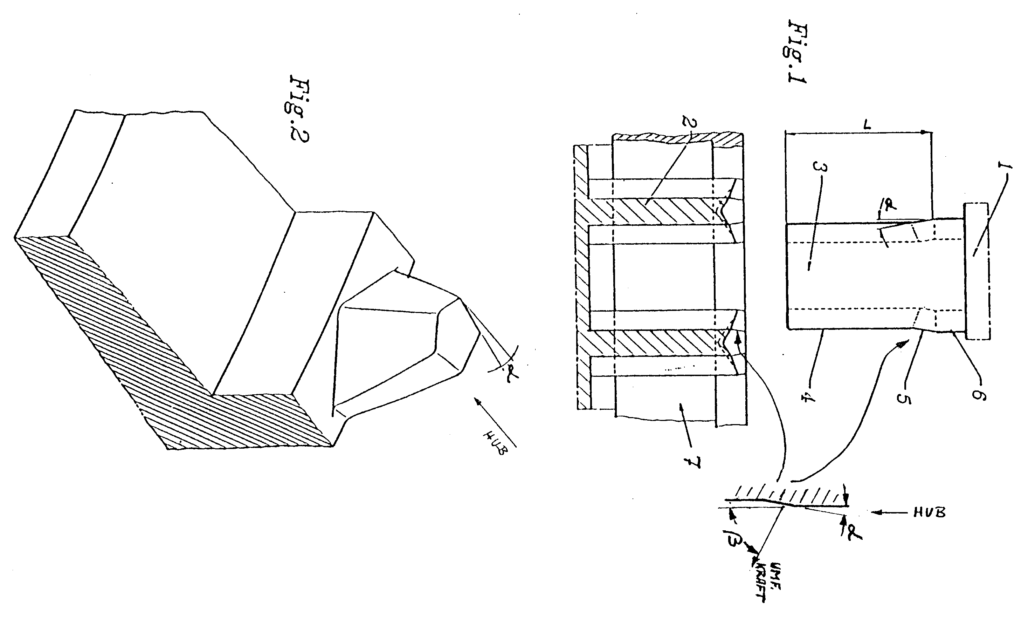

Das erfinderische Verfahren wurde zur Herstellung der Flankenzurücknahme an einem pulvermetallurgisch gefertigten Synchronring mit Kurzverzahnung für Kfz-Schaltgetriebe angewendet. Dabei wurde werkzeugseitig von einer Vorrichtung ausgegangen, wie sie zum Nachkalibrieren pulvermetallurgisch hergestellter Formkörper üblicherweise verwendet wird. Beim Pressen und Nachkalibrieren werden die Preßkräfte in Hubrichtung aufgebracht. Demgegenüber wird zur Durchführung des erfinderischen Umformverfahrens ein Kalibrierwerkzeug in seiner technischen Ausgestaltung dahingehend abgewandelt, daß während des Umformvorganges im Bereich der Zahnflanken lokal große Druck- bzw. Umformkräfte vom Werkzeug auf das Werkstück wirken - und zwar unter einem Winkel β mit 60° < β < 90° zur Stempelhubrichtung. Dabei sind die Winkel α und β nicht komplementär zu 90°, da infolge der Reibung zwischen Stempel und zu verformendem Bauteil die Umformkräfte nicht senkrecht zur Stempeloberfläche wirken. Zur Aufbringung der Umformkräfte unter dem Winkel β gemäß Erfindung bedarf es daher einer mechanischen Gleitführung des Oberstempel-Vorderteils im Unterstempel, also gerade in dem Teil, der beim üblichen Pressen, nicht aber nach vorliegender Erfindung, mit dem Werkstück in Berührung kommt. Figur 1 zeigt den Ausschnitt eines hierfür geeigneten Preßwerkzeuges mit eingelegtem Synchronring entsprechend der gewählten Schnittebene, teils im Schnitt, teils in einer Seitenansicht. Zum besseren technischen Verständnis ist in Figur 2 der Ausschnitt eines Synchronringes in Schrägansicht dargestellt. Das Preßwerkzeug besteht aus einem insgesamt kronenförmigen Oberstempel -1- und einem Unterstempel bzw. ein Werkzeugunterteil -2-. Ober- und Unterstempel enthalten Aussparungen entsprechend der Sollabmessungen des Synchronringes -7-. Der Oberstempel weist im Unterschied zu einem Nur-Kalibrierwerkzeug zusätzlich einzelne Finger -3-auf, welche zwischen den einzelnen Zähnen des Werkstückes hindurch in entsprechende Aussparungen im Unterstempel wie in eine Führungsbuchse hineingreifen. Während eines Preßhubes bewegt sich definitionsgemäß der Oberstempel insgesamt über eine Hublänge L in den Unterstempel hinein. Der vordere, zuerst in den Unterstempel eingreifende Teil des Oberstempels besitzt achsparallele Seitenwände -4- über mehr als die Länge L/2. Im mittleren Teil -5- weiten sich die Stempelwände konisch auf einen größeren Durchmesser auf - und zwar in den Bereichen, die an die Zahnflanken des Werkstückes angrenzen. Der Winkel α zwischen Hubrichtung und Konussteigung betrug im vorliegenden Beispiel 4°. Der innerste Teil -6- des Fingers besitzt wiederum achsparallele Seitenwände. Während des Preßvorganges setzt die Verformung der Zahnflanken zunächst an einer Seitenlinie ein und breitet sich beim weiteren Absenken des Oberstempels gegenüber dem Unterstempel auf die gesamte Fläche der Zahnflanke aus. Die Umformkräfte werden dabei unter dem Winkel β zur Stempelhubrichtung auf das Werkstück aufgebracht. Vorteilhafterweise wurde bei vorliegendem Beispiel in einem an die breite Zahnseite angrenzenden Zahnflanken-Streifen von maximal 0,5 mm keine Flankenzurücknahme angebracht und keine Umformung vorgenommen. Diese Maßnahmen setzte die Gefahr eines Werkzeugbruches wesentlich herab. Die zur Umformung der Zahnflanken vom Oberstempel ausgehenden Druckkräfte sind nicht radialsymmetrisch zur Stempelhubrichtung. Eine ausreichende Führung und Abstützung des Oberstempels in einer entsprechenden Ausnehmung bzw. Führung im Unterstempel ist daher unumgänglich.
Im Sinne der angestrebten Wirtschaftlichkeit des Verfahrens wurden sämtliche Zahnflankenzurücknahmen eines Synchronringes mit einem entsprechend ausgestalteten Preßwerkzeug in einem Arbeitsgang hergestellt und gleichzeitig erfolgte ein Nachkalibrieren des fertig gesinterten Werkstückes.
Derartig umgeformte und nachkalibrierte Synchronringe waren hinsichtlich Oberflächengüte und Maßtoleranz unmittelbar im Getriebe einbaufähig. Durch das Umformen wurden die mechanischen Werkstoffeigenschaften im Zahnbereich nicht verschlechtert, im vorliegenden Beispiel wurden diese infolge einer Materialverdichtung sogar leicht verbessert.
Die Synchronringe ließen sich abschließend mittels üblicher thermischer Gasbehandlungsverfahren oberflächenhärten.

## Patentansprüche

1. Verfahren zur Herstellung einer Flankenzurücknahme an Zahnflanken pulvermetallurgisch hergestellter Kupplungskörper, insbesondere für Kfz-Schaltgetriebe,
**dadurch gekennzeichnet,**
- daß die Ausgestaltung der Flankenzurücknahme an dem mit achsparallelen Zahnflanken gepreßten Kupplungskörper durch spanloses Umformen in einem einen Unter- und Oberstempel aufweisenden Preßwerkzeug erfolgt, welches Werkzeug Elemente aufweist, die allein der mechanischen Gleitführung des Oberstempels im Unterstempel dienen,
- daß Umformkräfte unter einem Winkel β zur Stempelhubrichtung, mit 60° < β < 90°, auf die zu verformenden Zahnflanken aufgebracht werden,
- daß etwa während der ersten Hälfte des Stempelhubes ab Ineinandergreifen von Ober- und Unterstempel keine und im weiteren zeitlichen Verlauf des Preßvorganges zunehmende Umformkräfte vom Oberstempel auf die Zahnflanken übertragen werden.

2. Anwendung des Verfahrens zur Herstellung einer Flankenzurücknahme nach Anspruch 1 auf Kupplungskörper mit Kurzverzahnungen, bei denen die anfangs achsparallel gelegenen Flächen der Zahnflanken um den Winkel α = 2 - 4° gegen die Achsrichtung des Kupplungskörpers versetzt sind.

3. Verfahren zur Herstellung einer Flankenzurücknahme nach Anspruch 1 und 2, dadurch gekennzeichnet, daß die Umformungen an sämtlichen Zahnflanken eines Kupplungskörpers in einem einzigen Arbeitsgang erfolgen.

4. Verfahren zur Herstellung einer Flankenzurücknahme nach Anspruch 1 bis 3, dadurch gekennzeichnet, daß die Umformkräfte von Null aus stetig zunehmen.

5. Verfahren zur Herstellung einer Flankenzurücknahme nach Anspruch 1 bis 4, dadurch gekennzeichnet, daß die Zahnflanken über ihre gesamten anfangs achsparallelen Flächen, ausgenommen ein schmaler, maximal 0,5 mm breiter, an eine Zahnseite angrenzender Randbereich, durch Umformen zurückgenommen werden.

6. Verfahren zur Herstellung einer Flankenzurücknahme nach Anspruch 1 bis 5, dadurch gekennzeichnet, daß die Kupplungskörper zumindest in Teilbereichen gleichzeitig mit der Herstellung der Flankenzurücknahme auf Sollabmessungen kalibriert werden.

7. Verwendung einer Vorrichtung zur Durchführung des Verfahrens nach Anspruch 1 bis 6, bei der der Oberstempel -1- in seinem während des Preßvorgangs zuerst in den Unterstempel -2- eingreifenden Bereich -4- zur Stempelhubrichtung achsparallele Seitenwände aufweist, an die stufenlos ein die Umformung bewirkender Stempelabschnitt -5- mit sich kegelförmig aufweitenden Seitenwänden angrenzt.

## Claims

1. A process for producing a flank chamfer on tooth flanks of coupling devices prepared by powder metallurgy, more particularly for motor vehicle speed-changing gears,
characterised in that
- the shaping of the flank chamfer on the coupling device stamped with axially parallel tooth flanks is effected by non-cutting forming in a pressing tool comprising an upper and lower die and elements which are used solely for the mechanical sliding guidance of the upper die in the lower die,
- forming forces are applied to the tooth flanks to be shaped at an angle β to the direction of the die stroke, with 60° < β < 90°,
- approximately during the first half of the die stroke after the engagement of the upper and lower die, no forming forces are transmitted, and during the further course of the pressing process increasing forming forces are transmitted by the upper die to the tooth flanks.

2. Use of the process for producing a flank chamfer according to claim 1 on coupling devices with short toothing, in which the initially axially parallel surfaces of the tooth flanks are offset by the angle α = 2 - 4° relative to the axial direction of the coupling device.

3. A process for producing a flank chamfer according to claims 1 and 2, characterised in that the forming is effected on all tooth flanks of a coupling device in a single working step.

4. A process for producing a flank chamfer according to claims 1 to 3, characterised in that the forming forces increase constantly from zero.

5. A process for producing a flank chamfer according to claims 1 to 4, characterised in that the tooth flanks are chamfered by forming over their entire initially axially parallel surfaces, with the exception of a narrow edge region adjoining one tooth side and having a maximum width of 0.5 mm.

6. A process for producing a flank chamfer according to claims 1 to 5, characterised in that the coupling devices are calibrated to nominal dimensions at least in partial regions at the same time as the flank chamfer is produced.

7. Use of an apparatus for carrying out the process according to claims 1 to 6, in which, in its region (4) firstly engaging in the lower die (2) during the pressing process, the upper die (1) comprises side walls axially parallel to the die stroke direction, merging smoothly into which side walls is a die section (5) with conically widening side walls, which effects the forming.

## Revendications

1. Procédé de réalisation d'une reprise de flancs, sur des flancs de dents de pièces de dispositifs d'accouplement fabriqués par métallurgie des poudres, en particulier pour des changements de vitesses de véhicules automobiles,
**caractérisé en ce que**
- la réalisation de la reprise de flancs s'effectue, sur le dispositif d'accouplement à flancs de dents parallèles à l'axe, par une déformation sans enlèvement de copeaux dans un outil de presse comprenant un poinçon inférieur et un poinçon supérieur, outil de presse qui présente des éléments qui ne servent qu'à guider mécaniquement à coulissement le poinçon supérieur dans le poinçon inférieur,
- en ce que des forces de déformation sont exercées, sur les flancs de dents à déformer, selon un angle β, tel que 60° < β < 90°, par rapport à la direction de course du poinçon
- en ce qu'aucune force de déformation n'est exercée par le poinçon supérieur sur les flancs de dents pendant la première moitié, approximativement, de la course du poinçon à partir de la pénétration du poinçon supérieur dans le poinçon inférieur, et en ce que des forces de déformation croissantes sont exercées par le poinçon supérieur sur les flancs de dents lors de la poursuite du processus de compression.

2. Utilisation du procédé pour la réalisation d'une reprise des flancs selon la revendication 1, sur des pièces ou dispositifs d'accouplement à dentures courtes dans lesquels les surfaces des flancs de dents, orientées à l'origine parallèlement à l'axe, sont rendues inclinées, de l'angle a = 2 à 4°, par rapport à la direction de l'axe du dispositif d'accouplement.

3. Procédé de réalisation d'une reprise de flancs selon l'une des revendications 1 et 2, caractérisé en ce que les déformations s'effectuent en une seule étape de travail sur l'ensemble des flancs de dents d'un dispositif d'accouplement.

4. Procédé de réalisation d'une reprise de flancs selon l'une des revendications 1 à 3, caractérisé en ce que les forces de déformation croissent constamment à partir de zéro.

5. Procédé de réalisation d'une reprise de flancs selon l'une des revendications 1 à 4, caractérisé en ce que les flancs de dents sont repris par déformation sur la totalité de leurs surfaces, qui sont à l'origine parallèles à l'axe, à l'exception d'une petite zone de bord, large de 0,5 mm au maximum, adjacente à un côté de dent.

6. Procédé de réalisation d'une reprise de flancs selon l'une des revendications 1 à 5, caractérisé en ce que le dispositif d'accouplement est calibré à des dimensions de consigne, au moins dans des zones partielles, d'une façon simultanée avec la réalisation de la reprise de flancs.

7. Utilisation d'un dispositif de mise en oeuvre du procédé selon l'une des revendications 1 à 6, dans laquelle le poinçon supérieur (1) présente, dans sa zone (4) pénétrant en premier dans le poinçon inférieur (2) pendant le processus de compression, des parois latérales dont l'axe est parallèle à la direction de course du poinçon, auxquelles est adjacente sans gradins une partie (5) de poinçon, effectuant la déformation, à parois latérales s'écartant en forme de cône.
